# FASCICULE DE BREVET EUROPEEN

(11) **EP 0 834 999 B1**
(45) Date de publication et mention de la délivrance du brevet: **21.01.2004**
(21) Numéro de dépôt: 96402124.0
(22) Date de dépôt: 07.10.1996
(51) Int. Cl.: H04B 5/00

(54) **Système de communication à câble rayonnant et équipements correspondants pour installation d'abonné**
Leckkabelübertragungssystem und entsprechende Ausrüstung für eine Teilnehmereinrichtung
Leaky feeder communications system and corresponding equipment for a subscriber installation

(43) Date de publication de la demande: 08.04.1998
(73) Titulaire: ALCATEL, 75382 Paris Cédex 08 (FR)
(72) Inventeur: Thomas, Gérard, 95610 Eragny sur Oise (FR); Lecomte, Daniel, 75116 Paris (FR); Brignol, Luc, 75011 Paris (FR); Humen, Florence, 95110 Sannois (FR)
(74) Mandataire: Sciaux, Edmond

(56) Documents cités:
- EP-A- 0 658 024

## Description

L'invention concerne un système de communication pour installation d'abonné et les équipements relatifs à ce système.

Il existe de nombreux systèmes de communication qui sont destinées à permettre de recevoir et d'émettre des informations, sous différentes formes, dans le cadre d'une installation dite d'abonné.

Les systèmes téléphoniques de communication dits privés, qui équipent des installations d'abonné, permettent ainsi des échanges d'informations entre des appareils mis à disposition d'utilisateurs dans l'installation. Généralement les appareils d'une installation peuvent aussi communiquer avec des appareils situés à l'extérieur de l'installation qui les comporte par l'intermédiaire d'au moins un réseau téléphonique de communication commun auquel l'installation considérée est rattachée de même que d'autres installations.

Une installation d'abonné organisée autour d'un tel système de type téléphonique comporte couramment un réseau interne de liaisons le plus généralement filaires reliant les différents appareils de communication mis à disposition des utilisateurs à une unité principale de communication. Celle-ci est par exemple constituée par un commutateur qui a pour fonction d'établir les communications entre les appareils et qui est donc relié aux différentes liaisons du réseau interne et à celles du réseau téléphonique de communication commun auquel l'installation considérée est rattachée.

Comme il est connu les systèmes de communication à base de liaisons filaires comportent le plus souvent des câblages et des prises d'accès au câblage pour les appareils qui sont fixes dans les installations qui les comportent. ceci constitue une gêne importante lorsque le positionnement des appareils dans une installation évolue en fonction des besoins des utilisateurs au cours du temps ou que le nombre d'appareils augmente au-delà des prévisions initiales. Ceci constitue aussi une gêne lorsque des adaptations des câblages et des prises deviennent nécessaires en raison de l'évolution des techniques de communication et des exigences techniques des utilisateurs.

Les mêmes inconvénients se retrouvent aussi dans d'autres systèmes de communication pour installation d'abonné qui comportent eux aussi des réseaux filaires fixes auxquels les appareils sont reliés par des prises d'accès généralement fixes. Un de ces systèmes connus comporte une unité réceptrice commune qui est exploitée pour recevoir et diffuser des informations audiovisuelles, en particulier des programmes de télévision, vers des utilisateurs dans une installation d'abonné. D'autres systèmes de ce genre comportent un câblage et des prises d'accès généralement fixes qui sont exploités pour relier, par exemple en boucle, une pluralité d'appareils de présentation et/ou de traitement d'informations d'une installation entre eux.

Il arrive aussi classiquement que des systèmes de communication exploitant des câblages et donc des prises, qui sont distincts et nécessairement différents, coexistent dans les mêmes locaux d'une installation pour assurer une desserte d'appareils relevant de technologies différentes, ce qui présente de nombreux inconvénients.

Il est par ailleurs connu de réaliser des échanges d'informations entre appareils par voie radio ce qui limite voir élimine les besoins en matière de câblage de communication entre appareils. Seules sont susceptibles de subsister les liaisons individuelles reliant respectivement chaque appareil à son antenne d'émission et/ou réception, liaisons qui peuvent avoir une longueur négligeable dans de nombreux cas. Un tel système est, par exemple, connu du document EP-A-0 658 024. Toutefois les systèmes de communication d'informations par voie radio ne conviennent pas nécessairement bien pour équiper des installations d'abonné réalisées dans un ou des locaux déterminés, comme le sont habituellement les systèmes de type téléphonique.

En effet, dans de nombreux cas plusieurs installations d'abonné peuvent être amenées à coexister dans des locaux voisins par exemple dans un même immeuble. Il peut être difficile de maîtriser avec précision les portées d'émission des antennes d'appareils émetteurs de ces installations voisines dans les locaux où ces dernières se situent, ce qui n'est pas sans inconvénient comme il est aussi connu.

L'invention propose donc un système de communication pour installation d'abonné comportant un équipement de communication centralisateur, doté de premiers moyens émetteurs-récepteurs auxquels est connecté au moins un câble d'émission et de réception de signaux hertziens sillonnant l'installation et permettant à cet équipement centralisateur de faire communiquer par signaux hertziens des appareils dotés chacun de seconds moyens émetteurs et/ou récepteurs à cet effet. L'équipement centralisateur et les appareils sont respectivement dotés de premiers moyens et de seconds moyens leur permettant d'émettre et/ou de recevoir des informations numérisées mises sous forme de paquets dans "N" canaux distincts prédéterminés de la bande de fréquences exploitable avec un câble.

Selon une caractéristique de l'invention, l'équipement centralisateur comporte des moyens de détection pour déterminer les fréquences des émissions reçues par l'intermédiaire du ou des câbles dans l'installation, éventuellement en provenance de moyens émetteurs externes à cette installation, et des moyens de sélection pour déterminer, en fonction des indications fournies par les moyens de détection, les canaux d'émission et de réception affectés à l'équipement centralisateur et aux appareils.

L'invention propose aussi un équipement de communication centralisateur. Selon une caractéristique de l'invention cet équipement centralisateur comporte des premiers moyens lui permettant d'émettre et/ou de recevoir des informations numérisées mises sous forme de paquets dans "N" canaux distincts prédéterminés de la bande de fréquences exploitable avec un câble, des moyens de détection pour déterminer les fréquences de toutes les émissions reçues par l'intermédiaire du ou des câbles dans l'installation, éventuellement en provenance de moyens émetteurs externes à cette installation,et des moyens de sélection pour déterminer, en fonction des indications fournies par les moyens de détection, les canaux d'émission et de réception qui sont affectés tant à lui-même qu'aux appareils dans l'installation.

L'invention propose aussi un équipement de type appareil doté de seconds moyens émetteurs et/ou récepteurs d'informations numérisées lui permettant d'émettre et/ou de recevoir des informations mises sous forme de paquets dans au moins un des "N" canaux distincts prédéterminés de la bande de fréquences exploitable avec un câble, ce canal.

Selon une caractéristique de l'invention, chaque appareil comporte des seconds moyens émetteurs et/ou récepteurs lui permettant d'exploiter au moins un canal de service commun prévu pour la transmission, d'indications de calage en fréquence, sous forme de paquet(s).

L'invention est précisée dans la description qui suit en liaison avec les figures évoquées ci-dessous.
La figure 1 présente un schéma de principe d'un système de communication pour installation d'abonné selon l'invention.
La figure 2 présente un schéma d'un équipement centralisateur pour système selon l'invention.
La figure 3 présente un schéma d'un appareil équipé pour communiquer dans le cadre du système selon l'invention.

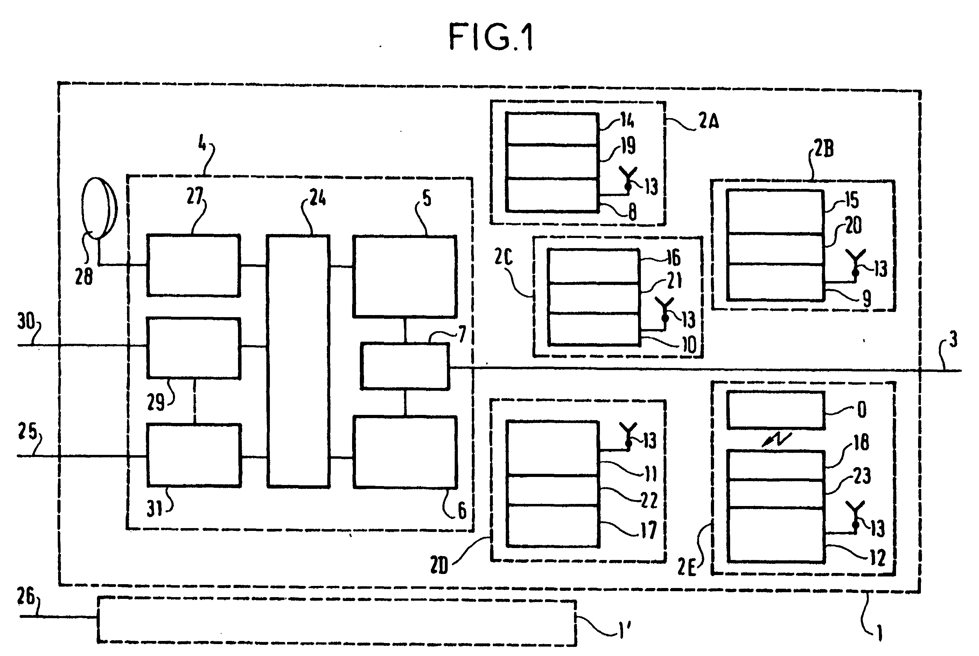

Le système de communication présenté en figure 1 est supposé destiné à équiper une installation d'abonné 1 qui est susceptible de comporter divers appareils 2, tels 2A, 2B, 2C, disposant directement ou indirectement de possibilités de communication.

Dans la suite de la présente description seront englobés sous la désignation d'appareils de communication tant les appareils de communication proprement dits qui sont spécifiquement prévus pour fonctionner dans le cadre du système selon l'invention que les appareils susceptibles d'avoir des fonctions très diverses auxquels sont annexés des moyens leur offrant des possibilités de communication dans le cadre du système de communication selon l'invention.

Certains des appareils 2 sont susceptibles de ne fonctionner qu'en tant que récepteurs de signaux d'information afin de permettre une restitution des informations transmises par ces signaux soit sous une forme accessible à un utilisateur humain, soit sous une forme exploitable par l'appareil qui les reçoit ou par un dispositif ou système, non représenté, auquel l'appareil sert alors d'intermédiaire.

De tels appareils récepteurs sont symbolisés sous les références 2A et 2B sur la figure 1, l'appareil 2A correspond par exemple à un récepteur radiophonique, alors que l'appareil 2B correspond à un téléviseur. L'un et l'autre sont susceptibles d'être des appareils spécifiquement prévus pour fonctionner dans le cadre du système de communication selon l'invention ou encore des appareils ultérieurement équipés de moyens additionnels leur permettant de fonctionner dans ce cadre. Ces moyens additionnels sont par exemple logés dans un boîtier additionnel que l'on vient associer à un appareil existant ou réalisés sous la forme d'un montage additionnel destiné à être incorporé dans le contenant d'un appareil existant. Par hypothèse, il en est de même pour tous les appareils qui sont envisagés ci-dessous.

D'autres appareils 2 sont susceptibles de fonctionner essentiellement en tant que générateurs de signaux d'information, notamment de sons, d'images, de commande, d'alarme..., ils sont symbolisés sous la référence 2C sur la figure 1.

D'autres appareils 2 sont enfin susceptibles de fonctionner tant comme émetteurs de signaux d'information que comme récepteurs, ce sont par exemple des appareils téléphoniques ou vidéophoniques, des télécopieurs, des ordinateurs multimédia, des dispositifs ou systèmes équipés de moyens permettant de les radiocommander... Ils sont symbolisés sous deux références 2D, 2E sur la figure 1, l'appareil 2D est par exemple un système susceptible d'être commandé à distance et qui est donc doté à cet effet de moyens bidirectionnels de communication, l'appareil 2E est par exemple un téléviseur supposé équipé d'une télécommande locale 0 sans fil, par exemple par signaux infrarouges, permettant une exploitation interactive.

Les divers appareils 2 d'une installation sont placés dans un environnement délimité connu qui, en général, est relativement rarement modifié pour une installation donnée, par contre au moins certains des appareils sont susceptibles d'être déplacés plus ou moins fréquemment dans cet environnement délimité. Une installation d'abonné, telle 1, est souvent située à proximité d'une autre installation d'abonné, telle 1', ou éventuellement de plusieurs, par exemple dans un même immeuble ou dans des bâtiments voisins, il faut donc tenter d'éviter les intercommunications incontrôlées entre systèmes de communication d'installations voisines.

Selon l'invention, il est prévu de faire communiquer les différents appareils d'une installation d'abonné par l'intermédiaire d'une ou d'au moins une liaison constituée par un câble d'émission et de réception de signaux hertziens 3 sillonnant l'installation et aboutissant à un équipement de communication centralisateur 4.

Un tel câble est par exemple susceptible d'avoir une constitution analogue à celle d'un câble rayonnant tel qu'exploité pour la diffusion d'informations émises sous forme de signaux hertziens vers des appareils récepteurs mobiles se déplaçant pratiquement parallèlement au câble.

Pour des raisons de simplification il ne sera fait état que d'une seule liaison par câble d'émission et de réception 3 dans la suite de la description, étant entendu que l'équipement d'une même installation à l'aide de plusieurs câbles d'émission et de réception est susceptible d'être déduit des indications données ici.

Le placement d'un câble d'émission et de réception 3 dans une installation est réalisé de façon que les zones de portée en émission et en réception qui lui correspondent coïncident avec les zones de cette installation où les appareils 2 de l'installation sont susceptibles d'être placés. Ce placement doit donc être réalisé selon les règles connues de l'homme de métier et en fonction de la configuration de l'installation de manière que, quelle que soit sa position dans cette installation, tout appareil 2 susceptible de fonctionner en tant que récepteur de signaux dans l'installation puisse recevoir dans des conditions d'exploitation satisfaisantes les signaux hertziens émis ou réémis, via le câble d'émission et de réception, par l'équipement de communication centralisateur 4 de l'installation.

Ce même placement doit être aussi prévu de manière que les signaux hertziens émis par un appareil 2 de l'installation dans cette dernière puisse être reçus par l'équipement de communication centralisateur 4 dans des conditions d'exploitation suffisantes, via le câble agissant en tant qu'antenne de réception pour cet équipement.

Bien entendu l'obtention de ces conditions d'exploitation implique une adéquation entre les différents éléments concernés du système de communication que constituent, d'une part, le câble d'émission et de réception 3, tel que positionné dans une installation, et d'autre part les moyens émetteurs et/ou récepteurs des appareils 2 et de l'équipement de communication centralisateur 4.

Dans l'exemple de réalisation envisagé sur la figure 1, cet équipement de communication centralisateur comporte des premiers moyens émetteurs-récepteurs, scindés en un sous-équipement émetteur 5 et un sous-équipement récepteur 6, éventuellement modulaires, qui sont reliés au câble d'émission et de réception 3 par une interface d'adaptation radio 7 afin de pouvoir émettre à destination des appareils 2 de l'installation et de recevoir les émissions provenant de ces appareils, via le câble 3. Ces sous-équipements 5 et 6 et cette interface 7 ne seront pas développés ici dans la mesure où ils sont susceptibles d'être réalisés en mettant en oeuvre des connaissances techniques bien connues de l'homme de métier. Ils permettent classiquement d'émettre ou de recevoir des signaux respectivement à transmettre ou transmis dans diverses sous-bandes de fréquences qui sont sélectionnées dans la bande passante de fréquences transmise par le câble d'émission et de réception 3 choisi et qui sont attribuées, dans des conditions qui seront évoquées plus loin, à l'équipement de communication centralisateur 4 et aux appareils 2 susceptibles d'émettre de l'installation considérée.

Les appareils 2 comportent aussi des moyens émetteurs et/ou récepteurs dits seconds, qui sont représentés par deux sous-équipements émetteurs 8 et 9, un sous-équipement récepteur 10 et des sous-équipements émetteurs-récepteurs 11, 12 respectivement affectés aux appareils récepteurs 2A, 2B, à l'appareil essentiellement émetteur 2C et aux appareils émetteurs-récepteurs 2D, 2E sur la figure 1.

Ces divers sous-équipements sont classiquement dotés d'antennes qui sont globalement référencées 13, bien que n'étant pas nécessairement identiques, et qui sont réalisées selon des techniques connues pour pouvoir émettre et/ou recevoir dans au moins une partie de la bande passante de fréquences transmissible par le câble d'émission et de réception 3, ceci devant être précisé plus loin.

Ces divers sous-équipements sont par ailleurs susceptibles soit d'être incorporés dans les appareils 2 qu'ils équipent, soit extérieurement ajoutés et par exemple accolés à ces appareils 2 auxquels ils sont alors raccordés par des moyens qui seront évoqués plus loin.

Chacun des appareils 2 possède par ailleurs une ou des fonctions propres pour lesquels il comporte un ensemble de moyens appropriés, ici dénommés moyens fonctionnels, qui ne seront pas développés plus avant et il est supposé apte à fournir et/ou recevoir des informations sous des formes déterminées. Ainsi l'appareil 2A, de type récepteur radiophonique, est supposé comporter un ensemble de moyens fonctionnels 14 permettant la capture et la restitution sous forme sonore des émissions radiophoniques publiques diffusées par voie hertzienne, l'appareil 2B, de type téléviseur, est supposé comporter un ensemble de moyens fonctionnels 15 permettant la capture et la restitution sous forme de sons et d'images d'émissions de télévision télétransmises. De manière analogue, l'appareil 2C, qui est par exemple de type caméra électronique, est supposé comporter un ensemble de moyens fonctionnels 16 pour produire des signaux électriques d'image à partir de ce qui est dans le champ d'un objectif qu'il comporte, ces signaux étant traités de manière à pouvoir être ultérieurement exploités pour assurer l'affichage des images filmées sur un écran d'un appareil reproducteur approprié, il comporte ici des moyens non représentés lui permettant de recevoir et d'émettre des informations auxiliaires de signalisation.

Les appareils référencés 2D et 2E sont de même respectivement supposés comporter des ensembles de moyens fonctionnels 17 et 18 qui sont constitués suivant leurs fonctions respectives et qui ne seront pas développés plus avant ici, dans la mesure où ils n'ont qu'un rapport indirect avec l'invention.

La mise en liaison de l'ensemble de moyens fonctionnels d'un quelconque des appareils 2A, 2B, 2C, 2D, 2E et des seconds moyens émetteurs et/ou récepteurs de ce même appareil s'effectue par l'intermédiaire de moyens d'adaptation, tels 19, 20, 21, 22 et 23, qui assurent suivant les besoins un traitement d'adaptation des signaux produits par les uns en vue de permettre la prise en compte de ces signaux par les autres. En effet la transmission des informations sous forme hertzienne, via le câble d'émission et de réception 3 s'effectue sous une forme standardisée quels que soient les appareils 2 concernés, avec d'éventuelles variations possibles sans sortir de cette forme standardisée en fonction des besoins des divers appareils en matière de transmission d'information.

Dans une forme préférée de réalisation, les informations à transmettre par l'intermédiaire du câble d'émission et de réception 3 sont numérisées et transmises par paquets standardisés.

Cette numérisation s'effectue éventuellement au niveau des moyens d'adaptation évoqués ci-dessus, si les informations à transmettre par le câble d'émission et de réception 3 ne sont pas déjà fournies sous forme numérique, une opération inverse est également réalisée sur les informations numérisées reçues au niveau des moyens d'adaptation de l'appareil récepteur, si besoin est.

De même, l'empaquetage des informations numérisées en vue de leur transmission par l'intermédiaire du câble d'émission et de réception 3 et l'opération inverse à la réception sont également susceptibles d'être effectuées au niveau des moyens d'adaptation de l'appareil récepteur, là encore si besoin est.

Suivant la constitution des appareils 2, les moyens d'adaptation peuvent être intégrés dans les ensembles de moyens fonctionnels de certains appareils, incorporés dans le contenant pour d'autres appareils, incorporés dans le contenant du sous-équipement émetteur et/ou récepteur individuellement associé à certains appareils lorsque ce sous-équipement est séparé de l'appareil auquel il est par exemple accolé, ou encore logés dans un contenant séparé destiné à être placé en position intermédiaire entre un appareil et un sous-équipement.

D'une manière analogue l'équipement de communication centralisateur 4 qui comporte des premiers moyens émetteurs-récepteurs scindés en un sous-équipement émetteur 5 et un sous-équipement récepteur 6 sur la figure 1, dispose aussi d'un ensemble de moyens auxiliaires de communication 24 notamment destiné à permettre la transmission d'informations parvenant d'un des appareils 2 de l'installation par l'intermédiaire du câble d'émission et de réception 3 vers un ou éventuellement plusieurs autres appareils 2 de cette installation par l'intermédiaire de ce même câble, en fonction des besoins des utilisateurs dans l'installation.

Dans une forme préférée de réalisation, l'ensemble de moyens auxiliaires de communication 24 est aussi prévu pour permettre les transmissions d'information entre au moins certains des appareils situés dans l'installation et des appareils compatibles indépendants de cette dernière, ces appareils indépendants étant par exemple dans une autre installation ici symbolisée sous la référence 1', les deux installations étant ici supposées interconnectées par l'intermédiaire de liaisons 25, 26 d'un réseau de communication classique non représenté.

L'ensemble de moyens auxiliaires de communication 24 est ici supposé avoir une fonction de commutation et une fonction de traitement des signaux d'information transmis entre appareils de l'installation par l'intermédiaire du câble d'émission et de réception 3, via les sous-équipements émetteur 5 et récepteur 6. Il a des fonctions identiques ou similaires pour les signaux d'information transmis entre au moins un appareil de communication 2 de l'installation 1 et au moins un appareil compatible, non représenté, indépendant de cette installation 1. Des ensembles modulaires de circuits spécialisés formant passerelle, tels 27, 28 et 29, sont alors prévus dans l'installation pour les signaux d'information entrants dans l'installation en provenance d'appareils indépendants de cette dernière ou sortants de l'installation à destination de tels appareils indépendants.

Un ensemble de circuits passerelles 27 est ainsi supposé destiné à permettre l'échange d'informations numérisées transmises entre l'installation et au moins un appareil, par exemple de type serveur, par l'intermédiaire d'une antenne 28 orientée vers un satellite terrestre non représenté, selon des procédures de transmission déterminées. Un autre ensemble de circuits passerelles 29 est par exemple plus particulièrement orienté vers la réception d'informations audiovisuelles transmises par l'intermédiaire d'une liaison 30 d'un réseau câblé de diffusion de programmes télévisés en mettant en oeuvre des procédures de transmission au moins partiellement différentes de celles évoquées plus haut. Un autre ensemble de circuits passerelles 31 est par exemple exploité pour les échanges d'informations de l'installation avec des installations identiques ou similaires, telle 1', interconnectées au travers d'au moins un réseau filaire de télécommunications.

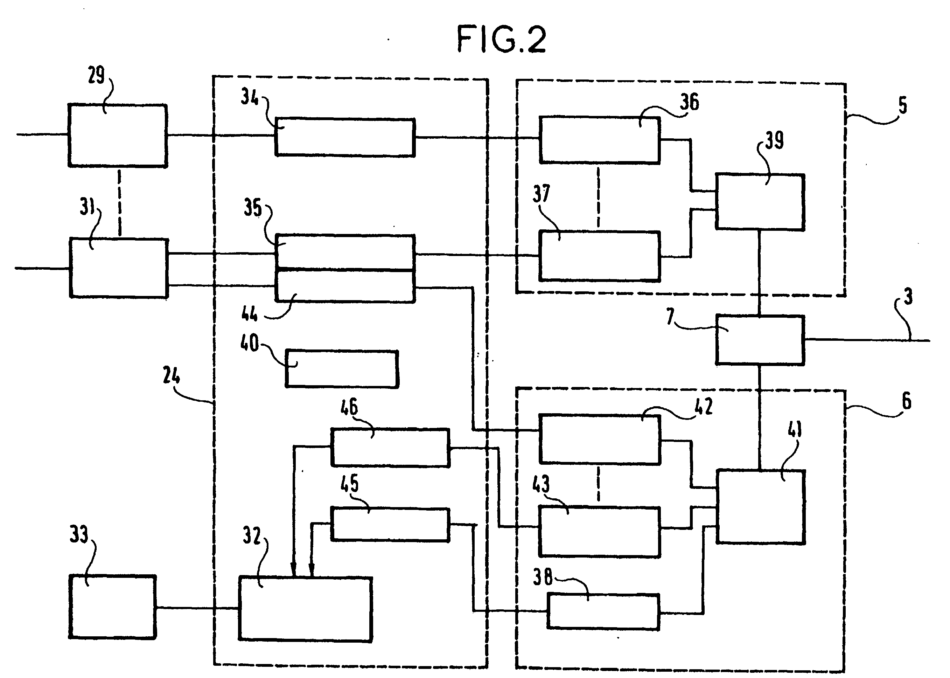

Le schéma d'équipement de communication centralisateur 4 présenté en figure 2 permet d'entrer plus avant dans la description de l'ensemble de moyens auxiliaires de communication 24 et des sous-équipements émetteur 5 et récepteur 6 associés à cet ensemble.

Comme déjà indiqué l'ensemble de "Q" circuits passerelles 29 est supposé permettre la réception, par au moins un des appareils 2 de l'installation, de programmes audiovisuels provenant de l'extérieur de cette installation par exemple par un câble 30, "Q" programmes pouvant alors être simultanément reçus par l'ensemble et diffusés dans l'installation par l'intermédiaire du câble d'émission et de réception 3. Comme déjà suggéré, chaque circuit passerelle de l'ensemble 29 est prévu pour pouvoir être accordé afin de recueillir des informations provenant d'une source possédant des caractéristiques de sélection déterminées. Dans la réalisation, cet accord est supervisé par un processeur principal de gestion 32 de l'installation ici supposé compris dans l'ensemble de moyens auxiliaires de communication 24, les liaisons entre ce processeur et les circuits passerelles n'étant pas figurées ici pour des raisons de simplification du schéma.

Les divers accords possibles sont susceptibles d'être réalisés par le processeur principal de gestion 32 à la demande des appareils 2 qui communiquent à cet effet avec lui par l'intermédiaire d'un agencement de signalisation 46 explicité plus loin.

Comme déjà indiqué, l'ensemble de circuits passerelles 29 est supposé unidirectionnel et destiné à recevoir des informations provenant de l'extérieur de l'installation, alors que l'ensemble de circuits passerelles 31 est supposé être bidirectionnel.

Un circuit de contrôle d'accès 33 est susceptible d'être associé à l'ensemble de moyens auxiliaires de communication 24 d'une installation selon l'invention et plus particulièrement au processeur principal de gestion 32 de cet ensemble pour permettre de résoudre notamment les questions d'autorisation et/ou restriction d'accès aux informations, en particulier d'origine externe à l'installation, à partir des appareils de cette dernière.

Ce circuit de contrôle d'accès 33 qui ne sera pas développé avant est par exemple un circuit permettant de prendre en compte des informations d'autorisation d'accès introduites par exemple par l'intermédiaire d'un clavier, d'un lecteur destiné à recevoir une carte privative d'accès, ou de tout autre moyen équivalent. D'une manière générale le processeur principal de gestion 32 supervise l'exploitation des circuits passerelles et des appareils de l'installation en fonction des demandes des utilisateurs et de critères d'exploitation préalablement déterminés pour l'installation considérée.

Les informations, reçues par un circuit d'un ensemble de circuits passerelles, tel que par exemple 29, à destination de l'installation qui le comporte, sont transmises par ce circuit à un agencement de traitement de signal 34 chargé d'assurer leur conversion sous une forme numérique permettant leur empaquetage ainsi que la constitution des paquets émanant du circuit considéré qui sont destinés à être émis par l'intermédiaire du câble d'émission et de réception 3 dans l'installation.

Il en est de même pour les informations d'origine externe, reçues par un circuit d'un ensemble de circuits passerelles, tel que par exemple 31, à destination de l'installation qui le comporte, ces informations étant transmises à un agencement de traitement de signal 35. Ce dernier joue vis-à-vis des informations d'origine externe reçues par le circuit considéré de l'ensemble 31, un rôle correspondant à celui rempli par l'agencement de traitement de signal 34 pour le circuit précédemment considéré de l'ensemble 29.

Les paquets respectivement produits par l'agencement de traitement de signal 34 desservant les circuits en activité de l'ensemble de circuits passerelles 29 sont respectivement transmis à un agencement assembleur 36 en vue d'être distribués en fonction de leurs origines respectives dans des zones distinctes de la bande de fréquences globalement exploitée par le système de communication selon l'invention de l'installation considérée.

Il en est de même pour les paquets produits par l'agencement de traitement de signal 35 à partir des informations reçues par les circuits en activité de l'ensemble 31, ces paquets étant transmis à un agencement assembleur 37 en vue d'être distribués en fonction de leurs origines respectives dans des zones distinctes de celles précédemment évoquées de la bande de fréquences globalement exploitée par le système de communication.

Pour la réalisation de ces distributions, chaque installation d'abonné dispose de moyens de détection 38, évoqués plus loin, qui sont par exemple situés dans le sous-équipement récepteur 6. Ces moyens de détection sont associés à des moyens de sélection 45 ici supposés inclus dans l'ensemble de moyens auxiliaires de communication 24.

Les moyens de détection sont conçus pour pouvoir balayer la bande des fréquences susceptible d'être reçues par l'intermédiaire du câble d'émission et de réception 3 afin de déterminer le niveau des signaux susceptibles d'être transmis par ce câble à l'équipement de communication centralisateur 4. Les moyens de sélection 45 permettent à l'installation qui les comporte de sélectionner pour ses besoins au moins une portion de la bande des fréquences transmissibles par le type de câble d'émission et de réception dont elle dispose, en tenant compte des portions de cette bande déjà exploitées par ailleurs pour des émissions dans l'environnement de l'installation, lorsque ces émissions dues à des moyens émetteurs externes sont susceptibles d'être reçues avec un niveau non négligeable dans cette installation, ceci étant susceptible d'être déterminé par les moyens de détection 38, comme indiqué ci-dessus.

Un partage en "N" différentes sous-bandes distinctes de la ou des portions de bande sélectionnée(s) pour l'installation par les moyens de détection 38 est aussi réalisé pour permettre des transmissions simultanées d'informations de provenances diverses par l'intermédiaire du câble d'émission et de réception 3. Les zones, de la bande de fréquences globalement exploitée par le système de communication, où sont respectivement distribués les paquets produits à partir d'informations fournies par les circuits passerelles en activité d'une installation, correspondent notamment chacune à une des sous-bandes mentionnées ci-dessus. L'affectation des sous-bandes pour une installation donnée est ici supposée supervisée par le processeur principal de gestion 32 de cette installation qui est relié tant au agencements assembleurs, tels que 36 et 37, qu'aux agencements de traitement de signal concernés, tels que 34 et 35.

Dans le sous-équipement émetteur 5, les agencements assembleurs, tels que 36 et 37, transmettent les paquets dont ils ont organisé la distribution fréquentielle à un agencement de structuration 39 qui combine les signaux qu'il reçoit en un signal composite destiné à être émis sur le câble d'émission et de réception 3 par l'intermédiaire de l'interface d'adaptation radio 7, dans des sous-bandes réservées aux émissions de l'équipement de communication centralisateur 4 dans les portions de bande de fréquences localement exploitées par l'installation. L'agencement de structuration 39 est piloté par l'intermédiaire d'un agencement synthétiseur de fréquences 40 commandé comme lui par le processeur principal de gestion 32 de l'installation.

L'interface d'adaptation radio 7 reçoit par ailleurs les signaux hertziens qui proviennent des appareils 2 et qui sont transmis par le câble d'émission et de réception 3.

Ces signaux correspondent eux aussi à des informations numériques ou numérisées qui sont émises sous forme de paquets par les appareils, ils sont localisés dans des sous-bandes réservées aux émissions des appareils dans les portions de bande de fréquences localement exploitées par l'installation et ils sont pris en compte par le sous-équipement récepteur 6.

Ce dernier comporte un agencement séparateur 41 piloté par l'agencement synthétiseur de fréquences 40 et commandé par le processeur principal de gestion 32 afin de démoduler les signaux reçus dans les sous-bandes susceptibles d'être exploitées par les appareils de l'installation considérée pour leurs émissions et de permettre la distribution de ces signaux démodulés à des agencements destinés à permettre des traitements des divers signaux obtenus qui soient spécialisés suivant les besoins.

A cet effet, le sous-équipement récepteur 6 comporte des agencements désassembleurs, tels 42 et 43, permettant de séparer les paquets obtenus à partir des signaux démodulés en fonction de leurs affectations respectives. L'agencement désassembleur 42 est notamment supposé chargé de prendre en compte les paquets relatifs aux informations émises par un appareil 2 de l'installation en vue de leur transmission hors de l'installation via un des circuits passerelles de l'ensemble 31. Cet agencement désassembleur 42 est relié à cet effet à un agencement de traitement de signal 44 de l'ensemble de moyens auxiliaires de communication 24 qui fonctionne à l'inverse de l'agencement de traitement de signal 35 évoqué plus haut et qui restitue les informations fournies sous la forme de paquets par l'appareil 2 considéré ci-dessus sous une forme compatible avec le circuit passerelle exploité pour leur transmission hors de l'installation. Ainsi si un appareil 2 émet des informations destinées à être transmises à l'extérieur de l'installation d'abonné qui le comporte par l'intermédiaire d'un circuit passerelle d'un ensemble de circuits passerelles 31 de type téléphonique numérique synchrone, il y a mise sous forme appropriée des informations reçues de l'appareil sous la forme de paquets au niveau de l'agencement de traitement de signal 44 de manière à permettre l'envoi de ces informations sous la forme d'octets par une ou plusieurs voies temporelles d'une liaison de réseau numérique synchrone.

D'une manière analogue les informations émises par un appareil 2 de l'installation considérée à destination d'un autre appareil 2 de cette même installation et par l'intermédiaire du câble d'émission et de réception 3 sont pris en compte par un agencement désassembleur non représenté du sous-équipement récepteur 6, afin d'être transmis à un agencement de traitement de signal non représenté. Ce dernier permet de transférer les informations reçues de l'appareil 2 émetteur sous la forme de paquets transmis dans une première sous-bande déterminée de fréquences par l'intermédiaire de paquets modifiés qui sont placés dans une sous-bande déterminée différente de la première sous-bande par un agencement assembleur, non représenté du sous-équipement émetteur 5, en vue d'être émis vers l'appareil 2 destinataire par l'intermédiaire du câble d'émission et de réception 3. A titre d'exemple d'application, l'appareil 2 émetteur est par exemple une source de signaux destinés à être reproduits par voie sonore, telle une source, de type lecteur d'enregistrement, pour chaîne de reproduction sonore à haute fidélité alors que l'appareil 2 est par exemple un agencement de restitution sonore à base de haut-parleurs qui est supposé connecté par voie hertzienne à la source, via le câble d'émission et de réception 3 et l'équipement de communication centralisateur 4. Ceci permet bien entendu de positionner avec une grande liberté et une grande latitude d'évolution d'une part la source et d'autre part l'agencement de restitution sonore dans l'installation ainsi équipée.

Selon une forme préférée de réalisation, l'un des agencements désassembleurs, ici référencé 43, est supposé chargé de prendre en compte des paquets relatifs aux informations de signalisation susceptibles d'être émis par des appareils 2 à destination de l'ensemble de moyens auxiliaires de communication 24, des circuits passerelles et/ou des autres appareils à l'occasion de communications uni ou bidirectionnelles. Cet agencement désassembleur 43 est ici supposé relié au processeur principal de gestion 32, par l'agencement de signalisation 46 évoqué plus haut, ce dernier recevant les informations de signalisation reçues des appareils 2 pour exploitation au niveau de l'équipement de communication centralisateur 4.

Par ailleurs les moyens de détection 38 déjà évoqués plus haut sont également reliés à l'interface radio 7, ici via l'agencement séparateur 41, pour être capable de détecter les portions de la bande de fréquence transmissible par la type de câble d'émission et de réception 3 de l'installation qui sont déjà exploitées par ailleurs dans l'environnement de cette installation et qu'il est donc préférable de ne pas exploiter de nouveau pour limiter les risques de perturbation. Cette détection s'effectue par balayage d'au moins la ou des portions de la bande de fréquence susceptibles d'être exploitées par le système de communication notamment à la mise en route de ce système dans l'installation d'abonné qu'il doit desservir et par exemple à chaque remise en route suite à un éventuel arrêt.

Ce balayage est ici supposé piloté par un algorithme exploité par le processeur principal de gestion 32.

Il permet de déterminer si, en l'absence de transmission d'informations par l'intermédiaire du système de communication selon l'invention, des signaux sont reçus, par l'intermédiaire du câble d'émission et de réception 3 et de l'interface d'adaptation radio 7, avec un niveau de puissance qui leur permettrait de parasiter les communications qui seraient établies sous forme hertzienne par l'intermédiaire du système selon l'invention.

Le système est donc apte à déterminer la ou les portions de la bande de fréquences exploitable qui ne sont pas exploitables en raison de leur utilisation par d'autres et à choisir en conséquence les sous-bandes qui seront exploitées par l'équipement de communication centralisateur 4 et par les appareils 2 qu'il comporte parmi la ou les portions de bande disponibles.

Ce choix s'effectue en fonction des besoins propres à l'installation à desservir et donc pratiquement en fonction des appareils 2 qu'elle est destinée à comporter.

Ce choix de sous-bandes est mis en mémoire au niveau du processeur principal de gestion 32 classiquement doté de mémoires adéquates et dans chaque appareil 2 qui reçoit et conserve les indications lui permettant de connaître la ou les sous-bandes qui le concerne(nt).

Dans une forme préférée de réalisation ces indications sont transmises par l'intermédiaire d'un canal de service commun situé dans une sous-bande de fréquences déterminée, ce canal unique étant destiné à être utilisé par toutes les installations équipées d'un système de communication selon l'invention, c'est-à-dire par tous les appareils 2 et équipements de communication centralisateurs de ces installations. Les transmissions par l'intermédiaire de ce canal de service sont prévues réalisées au moyen de paquets, tout équipement de communication centralisateur 4 s'identifiant par une adresse codée individuelle et tout appareil 2 s'identifiant par une adresse codée individuelle incorporant l'adresse individuelle de l'équipement de communication centralisateur 4 de l'installation à laquelle il est rattaché.

Dans une forme de réalisation, il est envisagé que les indications permettant le calage en fréquence les émetteurs et/ou les récepteurs des appareils 2 de chaque système de communication selon l'invention soient transmises vers ces appareils par l'intermédiaire du canal de service commun après l'opération de choix de sous-bandes pour une installation donnée, chaque appareil comportant des moyens mémoires connus et non représentés lui permettant de conserver les indications qui le concernent.

La sous-bande de fréquences affectée au canal de service commun est susceptible d'être très étroite dans la mesure où l'exploitation de ce canal est susceptible de n'être qu'à très bas débit.

A titre d'exemple une même installation est susceptible de comporter des sous-bandes réservées à des canaux relatifs à des applications différentes, notamment des sous-bandes pour des canaux permettant la diffusion d'informations vers les appareils 2 à partir de l'équipement de communication centralisateur 4, des sous-bandes réservées à des canaux destinés à être exploités par les appareils 2 pour leurs actions de télécommande, des sous-bandes pour des canaux destinés à permettre l'établissement de communications mono ou bidirectionnelles entre appareils en plus de la sous-bande réservée au canal de service. Les canaux de diffusion d'informations peuvent être exploités pour la distribution de programmes audiovisuels interactifs ou non et en particulier de programmes de télévision dans l'installation vers les appareils 2 techniquement capables de les recevoir.

Chaque canal de diffusion dont les possibilités de débit sont déterminées en fonction du service à rendre est ici préférablement accompagné d'un canal de télécommande qui lui est propre et qui est destiné à être utilisé par les appareils 2 aptes à exploiter les informations qu'il diffuse. Comme déjà indiqué, toutes les informations et commandes sont transmises sous forme de paquets entre les appareils 2 et l'équipement de communication centralisateur 4 quel que soit leur sens de transmission, comme cela est précisé plus loin.

A titre d'exemple complémentaire, l'établissement de communications locales entre appareils 2 d'une installation peut être réalisé à l'aide d'au moins un ou éventuellement de deux canaux réservés, dits d'intercommunication, ayant par exemple chacun un débit de 2 Mbit/s. Bien entendu l'établissement d'une communication entre un appareil 2 de l'installation et un appareil extérieur est réalisable de manière similaire. L'équipement de communication centralisateur 4 assure alors de manière connue en soi la transmission vers un circuit passerelle des informations reçues de l'appareil 2 par l'intermédiaire d'un canal d'interconnexion à destination de l'appareil extérieur et il diffuse par l'intermédiaire d'un second canal d'interconnexion les informations reçues de l'appareil extérieur via le circuit passerelle déjà considéré.

D'une manière générale, l'équipement de communication centralisateur 4 participe à toutes les transmissions réalisées dans l'installation qui le comporte vers ou à partir d'un appareil 2 de cette installation.

Il fournit des informations destinées à être exploitées lors de la constitution de chacun des paquets qu'il transmet ou qui lui sont transmis. Selon une forme préférée de réalisation, les paquets relatifs à un même canal sont prévus de même taille, cette dernière dépendant notamment du débit demandé par l'application exploitant le canal considéré. A titre d'exemple non limitatif, les paquets prévus pour une application, de type diffusion de programmes de télévision, sont susceptibles d'être prévus chacun avec un en-tête constitué de cinq octets, quarante-quatre octets d'information utile, ici supposés également partagés entre plusieurs programmes, par exemple dix, et quatre octets pour la vérification de la conformité du paquet reçu par rapport au paquet émis.

L'équipement de communication centralisateur 4 comporte des moyens non représentés lui permettant d'insérer, de manière connue en elle-même, une information de synchronisation dans l'en-tête des paquets qu'il émet par l'intermédiaire du câble d'émission et de réception 3 à destination des appareils de communication 2. Cette information de synchronisation est par exemple constituée par un octet particulier, elle est susceptible être exploitée par les appareils de communication 2 pour l'exploitation des paquets qu'ils reçoivent et pour l'émission des paquets qu'éventuellement ils produisent.

Selon une forme préférée de réalisation, l'équipement de communication centralisateur 4 initialise de manière périodique ou quasiment périodique une émission de paquet dans chacun des canaux exploités de l'installation qui le comporte et ce en fonction des besoins propres aux applications auxquelles ces canaux sont affectés. Cette initialisation est susceptible de se limiter à l'émission d'une partie d'en-tête de paquet dans un canal déterminé, lorsque l'équipement de communication centralisateur 4 n'a pas d'information utile à transmettre dans ce canal. Le paquet peut alors éventuellement être complété par un appareil de communication 2 désireux d'émettre à ce moment dans le canal.

Par contre le remplissage d'un paquet après initialisation est achevé par l'équipement de communication centralisateur 4, lorsque ce dernier dispose d'informations à transmettre par l'intermédiaire du câble d'émission et de réception 3 vers au moins un des appareils de communication 2 de l'installation. Il assure alors, sans interruption, l'émission du paquet dans sa totalité c'est-à-dire de la suite composée par l'en-tête complet, suivi des informations utiles à transférer et des informations nécessaires à la vérification de la conformité du paquet à la réception.

Selon une forme préférée de réalisation, la partie d'en-tête de paquet émise par l'équipement de communication centralisateur 4 dans un canal déterminé comporte une indication de disponibilité du paquet destinée aux appareils de communication 2 susceptibles d'émettre dans ce canal, dans le cas où il n'y a pas eu réservation préalable du paquet.

Tout appareil de communication 2 ayant la capacité d'émettre sur ce canal est susceptible de tenter de se réserver, selon ses besoins en matière d'émission le paquet émis et/ou au moins un paquet ultérieur disponible. A cet effet un tel appareil de communication 2 émet vers le câble d'émission et de réception 3 dans le canal choisi à la suite de la partie d'en-tête qu'il a reçue de l'équipement de communication centralisateur 4.

Selon les besoins, le transfert d'informations d'un appareil de communication 2 vers l'équipement de communication centralisateur 4 peut se suffire d'un seul paquet, de paquets successifs sans contrainte temporelle ou de paquets successifs à distribution pratiquement périodique.

Dans les deux dernières hypothèses indiquées ci-dessus, selon une forme préférée de réalisation, une réservation de paquets est susceptible d'être réalisée par l'équipement de communication centralisateur 4 en fonction des besoins d'un appareil de communication 2 et au profit de ce dernier par indication de l'adresse de cet appareil dans l'en-tête des paquets qui lui sont spécifiquement réservés à l'émission.

A partir du moment où deux appareils de communication 2 sont susceptibles de chercher simultanément à se réserver un paquet signalé comme disponible dans un même canal, il est prévu de mettre en oeuvre un procédé de traitement de collision par lequel chacun des appareils est averti que la tentative de réservation par émission vers le câble d'émission et de réception 3 n'a pas correctement abouti au niveau de l'équipement de communication centralisateur 4.

De tels procédés sont bien connus de l'homme de métier et ils conduisent par exemple à la répétition des tentatives des appareils en compétition avec pratiquement un décalage entre tentatives des appareils qui permet à l'un de réussir préalablement à l'autre, après que chacun de ces appareils ait séparément appris ou déterminé que sa tentative précédente a échoué.

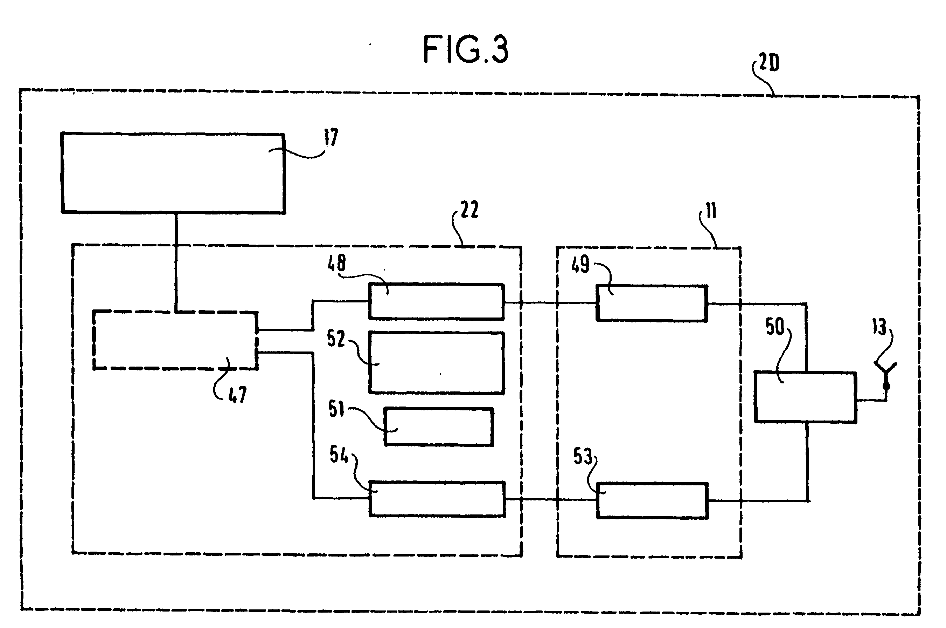

Comme indiqué plus haut la figure 3 permet de définir succinctement les éléments constitutifs essentiels d'un appareil 2 qui, dans l'exemple non limitatif choisi correspond à un appareil 2D tel que défini en figure 1. Cet appareil 2D correspond par exemple à une caméra, ou un camescope, de télésurveillance d'un processus, il est donc supposé doté de moyens bidirectionnels de communication qui permettent de le télécommander depuis un autre appareil situé dans ou hors de l'installation et de transmettre les informations d'image et éventuellement de son obtenues à l'aide de la caméra.

L'appareil 2D comporte un ensemble de moyens 17 qui sont propres aux fonctions à assurer, soit ici les fonctions de prise d'image et éventuellement de son, cet ensemble de moyens 17 est classiquement conçu pour recevoir des informations de commande sous la forme de signaux déterminés et pour fournir des signaux d'image et de son sous une forme déterminée. Les formes de ces signaux localement reçus ou produits ne correspondent pas nécessairement à celle sous laquelle les informations sont susceptibles d'être transmises par un appareil 2 dans le système de communication selon l'invention, il est donc prévu d'ajouter un agencement adaptateur 47 à cet effet, si besoin est.

Comme déjà suggéré par ailleurs un tel agencement adaptateur 47 est susceptible d'être disposé de différentes manières dans l'ensemble que forme l'appareil 2D qui le comporte, il est ici supposé inclus dans les moyens d'adaptation 22 de cet appareil. Ces derniers assurent notamment l'empaquetage des informations fournies par l'ensemble de moyens 17, soit ici les informations d'image et éventuellement de son et les informations de signalisation qui leur sont éventuellement associées, cet empaquetage est ici supposé réalisé par l'intermédiaire d'un agencement de traitement de signal 48.

Ce dernier est relié à un agencement émetteur 49 en vue de permettre l'émission, par voie hertzienne, des paquets qu'il produit via une interface radio 50 et une antenne 13 en direction du câble d'émission et de réception 3 de l'installation considérée.

L'agencement émetteur est piloté en fréquence par un agencement d'horloge 51 placé sous le contrôle d'un processeur de gestion 52 affecté à l'appareil 2D. Comme déjà indiqué plus haut, le positionnement des éléments constitutifs évoqués ci-dessus, dans le cadre de l'ensemble défini ici en tant qu'appareil, est susceptible de variations en fonction des contraintes matérielles et en conséquence, il ne doit donc pas être considéré comme limitatif.

Comme déjà indiqué plus haut, l'appareil 2D reçoit et conserve, par exemple au niveau d'une mémoire associée au processeur de gestion 52 qu'il comporte, des indications définissant les sous-bandes relatives aux canaux qu'il est susceptible d'exploiter. Ces indications sont ici supposées transmises par l'intermédiaire du canal de service commun évoqué plus haut, elles sont donc supposées reçues de l'équipement de communication centralisateur 4, via l'antenne 13 et par l'intermédiaire de l'interface radio 50 et d'un agencement récepteur 53. Un agencement de traitement de signal 54 éventuellement confondu avec l'agencement 48 permet de convertir les paquets reçus de l'agencement récepteur sous une forme exploitable suivant les destinations par le processeur de gestion 52, par l'agencement adaptateur 47 ou éventuellement en direct par l'ensemble de moyens fonctionnels 17 lui-même.

Les appareils 2 d'une installation, tel notamment l'appareil 2D, qui sont susceptibles d'émettre à destination de l'équipement de communication centralisateur 4 de cette installation, dans un canal déterminé et via le câble d'émission et de réception 3, reçoivent les signaux de synchronisation émis par cet équipement via ce canal et sont susceptibles d'émettre à leur tour dans ce canal par l'intermédiaire de paquets dont les en-têtes respectifs indiquent qu'ils sont disponibles. Chacun de ces appareils peut éventuellement obtenir la réservation de paquets à son profit pour ses émissions par envoi d'une information de demande appropriée, il peut aussi si besoin est transmettre des informations de commande ou plus généralement de signalisation d'une manière analogue.

Les appareils 2 d'une installation qui sont susceptibles de recevoir des informations transmises par l'équipement de communication centralisateur 4 par l'intermédiaire du câble d'émission et de réception 3 sont susceptibles d'être calés sur le canal à recevoir par construction ou présélection pour les moins sophistiqués et par exploitation des indications transmises par le canal de service commun pour les autres.

## Revendications

1. Système de communication pour installation d'abonné comportant un équipement de communication centralisateur (4), doté de premiers moyens émetteurs-récepteurs (5, 6) auxquels est connecté au moins un câble d'émission et de réception de signaux hertziens (3) sillonnant l'installation et permettant à cet équipement centralisateur de faire communiquer par signaux hertziens des appareils (2) dotés chacun de seconds moyens émetteurs et/ou récepteurs (8 à 12) à cet effet, le dit système de communication étant **caractérisé en ce que** l'équipement centralisateur (4) et les appareils (2) sont respectivement dotés de premiers moyens et de seconds moyens leur permettant d'émettre et/ou de recevoir des informations numérisées mises sous forme de paquets dans "N" canaux distincts prédéterminés de la bande de fréquences exploitable avec un câble (3), ledit équipement centralisateur comportant aussi des moyens de détection (38) pour déterminer les fréquences de toutes les émissions reçues par l'intermédiaire du où des câbles dans l'installation, ainsi que des moyens de sélection (45) pour déterminer, en fonction des indications fournies par les moyens de détection, les canaux d'émission et de réception affectés à l'équipement de communication centralisateur et aux appareils.

2. Système, selon la revendication 1, **caractérisé en ce qu'**il comporte un canal de service commun exploité par l'équipement centralisateur (4) et par les appareils (2) de l'installation pour la transmission, sous forme de paquets, des indications relatives au calage en fréquence des seconds moyens émetteurs et/ou récepteurs comportés par les dits appareils.

3. Système, selon l'une des revendications 1 et 2, **caractérisé en ce qu'**il comporte au moins un canal dit d'interconnexion exploité par les moyens émetteurs (10, 11 ou 12) d'un appareil (2) de l'installation pour la transmission d'informations vers les premiers moyens récepteurs (6) de l'équipement centralisateur et à destination d'un autre appareil (2) de l'installation.

4. Equipement de communication centralisateur, pour système de communication d'une installation d'abonné, doté de premiers moyens émetteurs-récepteurs (5, 6) auxquels est connecté au moins un câble d'émission et de réception de signaux hertziens (3) sillonnant l'installation et lui permettant de faire communiquer par signaux hertziens des appareils (2) dotés de seconds moyens émetteurs et/ou récepteurs (8 à 12) à cet effet, **caractérisé en ce qu'**il comporte:
- des premiers moyens lui permettant d'émettre et/ou de recevoir des informations numérisées mises sous forme de paquets dans "N" canaux distincts prédéterminés de la bande de fréquences exploitable avec un câble (3),
- des moyens de détection (38) pour déterminer les fréquences de toutes les émissions reçues par l'intermédiaire du où des câbles dans l'installation,
- des moyens de sélection (45) pour déterminer, en fonction des indications fournies par les moyens de détection, les canaux d'émission et de réception qui sont affectés tant à lui-même qu'aux appareils dans l'installation.

5. Equipement, de type appareil d'abonné, pour système de communication d'une installation d'abonné comportant un équipement de communication centralisateur (4), doté de premiers moyens émetteurs-récepteurs (5, 6) auxquels est connecté au moins un câble d'émission et de réception de signaux hertziens (3) sillonnant l'installation et permettant à cet équipement centralisateur de faire communiquer par signaux hertziens des équipements de type appareil, le dit équipement, de type appareil d'abonné, étant **caracterisé en ce que** ses appareils d'abonné sont dotés de seconds moyens émetteurs et/ou récepteurs (8 à 12) leur permettant d'émettre et/ou de recevoir des informations mises sous forme de paquets dans au moins un des "N" canaux distincts prédéterminés de la bande de fréquences exploitable avec un câble (3) et leur permettant d'exploiter au moins un canal de service commun prévu pour la transmission d'indications de calage en fréquence sous forme de paquet(s).

## Patentansprüche

1. Kommunikationssystem für eine Teilnehmereinrichtung, aufweisend eine zentrale Kommunikationsausrüstung (4), die mit ersten Sende-/Empfangsvorrichtungen (5, 6) ausgestattet ist, an die mindestens ein Sende- und Empfangskabel für Funksignale (3) angeschlossen ist, welches die Einrichtung durchzieht und es dieser zentralen Ausrüstung ermöglicht, eine Kommunikation über Funksignale zwischen Geräten (2) herzustellen, von denen jedes zu diesem Zweck mit zweiten Sende- und/oder Empfangsvorrichtungen (8 bis 12) ausgestattet ist, wobei das genannte Kommunikationssystem **dadurch gekennzeichnet ist, dass** die zentrale Ausrüstung (4) und die Geräte (2) jeweils mit ersten Vorrichtungen und mit zweiten Vorrichtungen ausgestattet sind, die es ihnen ermöglichen, digitalisierte Informationen zu senden und/oder zu empfangen, die in Form von Paketen in "N" zuvor festgelegte, klar voneinander unterschiedene Kanäle des mit einem Kabel (3) nutzbaren Frequenzbandes gestellt werden, wobei die zentrale Ausrüstung auch Erkennungsvorrichtungen (38) zur Bestimmung der Frequenzen aller Sendevorgänge aufweist, die über das oder die Kabel in der Einrichtung empfangen werden, sowie Auswahlvorrichtungen (45), um in Abhängigkeit von den von den Erkennungsvorrichtungen gelieferten Angaben die Sende- und Empfangskanäle zu bestimmen, die der zentralen Kommunikationsausrüstung und den Geräten zugewiesen sind.

2. System nach Anspruch 1, **dadurch gekennzeichnet, dass** es einen gemeinsamen Dienstkanal aufweist, der von der zentralen Ausrüstung (4) und den Geräten (2) der Einrichtung genutzt wird, um die Angaben zur Frequenzeinstellung der zweiten Sende- und/oder Empfangsvorrichtungen, welche die genannten Geräte enthalten, in Form von Paketen zu übertragen.

3. System nach einem der Ansprüche 1 und 2, **dadurch gekennzeichnet, dass** es mindestens einen sogenannten Verbindungskanal aufweist, der von den Sendevorrichtungen (10, 11 oder 12) eines Gerätes (2) der Einrichtung für die Übertragung von Informationen an die ersten Empfangsvorrichtungen (6) der zentralen Ausrüstung sowie an ein anderes Gerät (2) der Einrichtung genutzt wird.

4. Zentrale Kommunikationsausrüstung für das Kommunikationssystem einer Teilnehmereinrichtung, ausgestattet mit ersten Sende-/Empfangsvorrichtungen (5, 6), mit denen mindestens ein Sende- und Empfangskabel für Funksignale (3) verbunden ist, welches die Einrichtung durchzieht und ihr ermöglicht, eine Kommunikation über Funksignale zwischen den Geräten (2) herzustellen, welche zu diesem Zweck mit zweiten Sende- und/oder Empfangsvorrichtungen (8 bis 12) ausgestattet sind, **dadurch gekennzeichnet, dass** sie Folgendes aufweist:
- erste Vorrichtungen, die es ihr ermöglichen, digitalisierte Informationen zu senden und/oder zu empfangen, die in Form von Paketen in "N" zuvor festgelegte, klar voneinander unterschiedene Kanäle des von einem Kabel (3) nutzbaren Frequenzbandes gestellt werden;
- Erkennungsvorrichtungen (38) zur Bestimmung der Frequenzen aller Sendevorgänge, die über das oder die Kabel in der Einrichtung empfangen werden;
- Auswahlvorrichtungen (45), um in Abhängigkeit von den von den Erkennungsvorrichtungen gelieferten Angaben die Sende- und Empfangskanäle zu bestimmen, die ihr selbst und den Geräten zugewiesen sind.

5. Ausrüstung vom Typ eines Teilnehmergerätes für das Kommunikationssystem einer Teilnehmereinrichtung, aufweisend eine zentrale Kommunikationsausrüstung (4), die mit ersten Sende-/Empfangsvorrichtungen (5, 6) ausgestattet ist, an die mindestens ein Sende- und Empfangskabel für Funksignale (3) angeschlossen ist, welches die Einrichtung durchzieht und es dieser zentralen Ausrüstung ermöglicht, eine Kommunikation über Funksignale zwischen Ausrüstungen vom Typ eines Gerätes herzustellen, wobei die genannte Ausrüstung vom Typ eines Teilnehmergerätes **dadurch gekennzeichnet ist, dass** ihre Teilnehmergeräte mit zweiten Sende- und/oder Empfangsvorrichtungen (8 bis 12) ausgestattet sind, die es ihnen ermöglichen, digitalisierte Informationen zu senden und/oder zu empfangen, die in Form von Paketen in mindestens einen der "N" zuvor festgelegten, klar voneinander unterschiedenen Kanäle des von einem Kabel (3) nutzbaren Frequenzbandes gestellt werden, und die es ihnen ermöglichen, mindestens einen gemeinsamen Dienstkanal zu nutzen, der für die Übertragung von Frequenzeinstellungsangaben in Form von Paket(en) vorgesehen ist.

## Claims

1. A communications system for a subscriber installation, the system including centralizing communications equipment (4) provided with first transmitter-receiver means (5, 6) connected to at least one transmit and receive cable (3) for transmitting and receiving radio signals, which cable extends throughout the installation and enables the centralizing equipment to have terminal appliances (2) communicate via radio signals, each of which terminal appliances is provided with second transmitter and/or receiver means (8 to 12) for this purpose, said communications system being **characterized in that** the centralizing equipment (4) and the terminal appliances (2) are respectively provided with first means and with second means enabling them to transmit and/or to receive digitized information put in the form of packets in "N" predetermined distinct channels of the frequency band usable with a cable (3), said centralizing equipment also including detection means (38) for determining the frequencies of all of the transmissions received via the cable(s) in the installation, and selection means (45) for determining, as a function of the indications supplied by the detection means, the transmit and receive channels allocated to the centralizing communications equipment and to the terminal appliances.

2. A system according to claim 1, **characterized in that** it includes a common service channel used by the centralizing communications equipment (4) and by the terminal appliances (2) of the installation for transmitting, in the form of packets, indications relative to frequency setting of the second transmitter and/or receiver means included in said terminal appliances.

3. A system according to claim 1 or 2, **characterized in that** it includes at least one "interconnection" channel used by the transmitter means (10, 11, or 12) of a terminal appliance (2) of the installation for transmitting information to the first receiver means (6) of the centralizing equipment and addressed to another terminal appliance (2) of the installation.

4. Centralizing communications equipment for a communications system of a subscriber installation, the equipment being provided with first transmitter-receiver means (5, 6) connected to at least one transmit and receive cable (3) for transmitting and receiving radio signals, which cable extends throughout the installation and enables the centralizing equipment to have terminal appliances (2) communicate via radio signals, each of which terminal appliances is provided with second transmitter and/or receiver means (8 to 12) for this purpose, said centralizing communications equipment being **characterized in that** it includes:
first means enabling it to transmit and/or to receive digitized information put in the form of packets in "N" predetermined distinct channels of the frequency band usable with a cable (3);
detection means (38) for determining the frequencies of all of the transmissions received via the cable(s) in the installation; and
selection means (45) for determining, as a function of the indications supplied by the detection means, the transmit and receive channels allocated both to the centralizing communications equipment and also to the terminal appliances in the installation.

5. Equipment, of the subscriber terminal appliance type, for a communications system for a subscriber installation, the system including centralizing communications equipment (4) provided with first transmitter-receiver means (5, 6) connected to at least one transmit and receive cable (3) for transmitting and receiving radio signals, which cable extends throughout the installation and enables the centralizing equipment to have items of equipment of the terminal appliance type communicate via radio signals, said equipment of the subscriber terminal appliance type being **characterized in that** its subscriber terminal appliances are provided with second transmitter and/or receiver means (8 to 12) enabling them to transmit and/or receive digitized information put in the form of packets in at least one of the "N" predetermined distinct channels of the frequency band usable with a cable (3), and enabling them to use at least one common service channel organized to convey frequency setting indications in the form of one or more packets.
